# EUROPEAN PATENT SPECIFICATION

(11) **EP 0 926 051 B1**
(45) Date of publication and mention of the grant of the patent: **30.07.2003**
(21) Application number: 97122904.2
(22) Date of filing: 24.12.1997
(51) Int. Cl.: B62D 43/04

(54) **A device for actuating a spare tire holder cage**
Vorrichtung zur Betätigung eines Reserveradkäfigs
Dispositif pour actionner une cape de roue de secours

(43) Date of publication of application: 30.06.1999
(73) Proprietor: FIAT AUTO S.p.A., 10135 Torino (IT)
(72) Inventor: Bocca, Gianni Mauro, 10100 Torino (IT); Richiardi, Silvio, 10100 Torino (IT)
(74) Representative: Di Francesco, Gianni

(56) References cited:
- FR-A- 1 416 531
- US-A- 4 087 032

## Description

The present invention refers to a device for actuating a spare tire holder cage from the boot of a motor vehicle, the holder cage being fitted underneath the rear part of the vehicle floor and operable from the boot of the vehicle.

For lowering and raising this kind of spare tire supports, there is generally employed a threaded stem fitted at the lower end of a hook for engaging the cage, which is made of plastic or metallic material. The threaded stem engages a threaded bolt that is generally rotated from the inside of the boot to raise and lower the cage connected to the stem.

The releasing operation is carried out by unscrewing the threaded bolt or stem with a special tool by such à length as to allow the cage to come free of the hook by lifting the cage manually. The cage then is laid on the ground, still manually. A similar, reverse sequence is followed to fit the spare tire back in the car.

The above described operations are rather long and complicated. Further, if the weather is wet and the road unmade, the user is likely to get dirty, particularly when he has to manually lift and remove the cage from the hook associated with the threaded stem. In the document US-A-4 087 032 it is disclosed a device for actuating a spare tire holder cage from the boot of a motor vehicle. Said cage is hinged under the rear part of the floor and his non-hinged end is provided with lifting means in form of a tubular foldable lever associated with locking means. A drawback of this device is that the locking means are usable only in one closing position of the cage, so that his operation requires a considerable effort to reach said fixed position with a single draught on the tubular lever.

It is an object of the present invention to render these operations easier, reducing at the same time the effort required.

These and other objects are achieved by a device for actuating a spare tire holder cage as defined in appended claim 1, the non characterising part of which is referred to US-A-4 087 032.

FR 1 416 531 A as well shows actuating means for a space time holder cage. The cage arranged under the near portion of the vehicle, the actuating, that are formed as a cable with locking means of the sawtooth type, being positioned in the boot of the vehicle.

Further advantages and features of the present invention will become readily apparent to those skilled in the art from a study of the following description of an exemplary preferred embodiment when read in conjunction with the attached drawings, in which:
- FIG. 1: is a schematical partial cross sectional view of the two operation positions of a device according to the present invention mounted under the boot of a car;

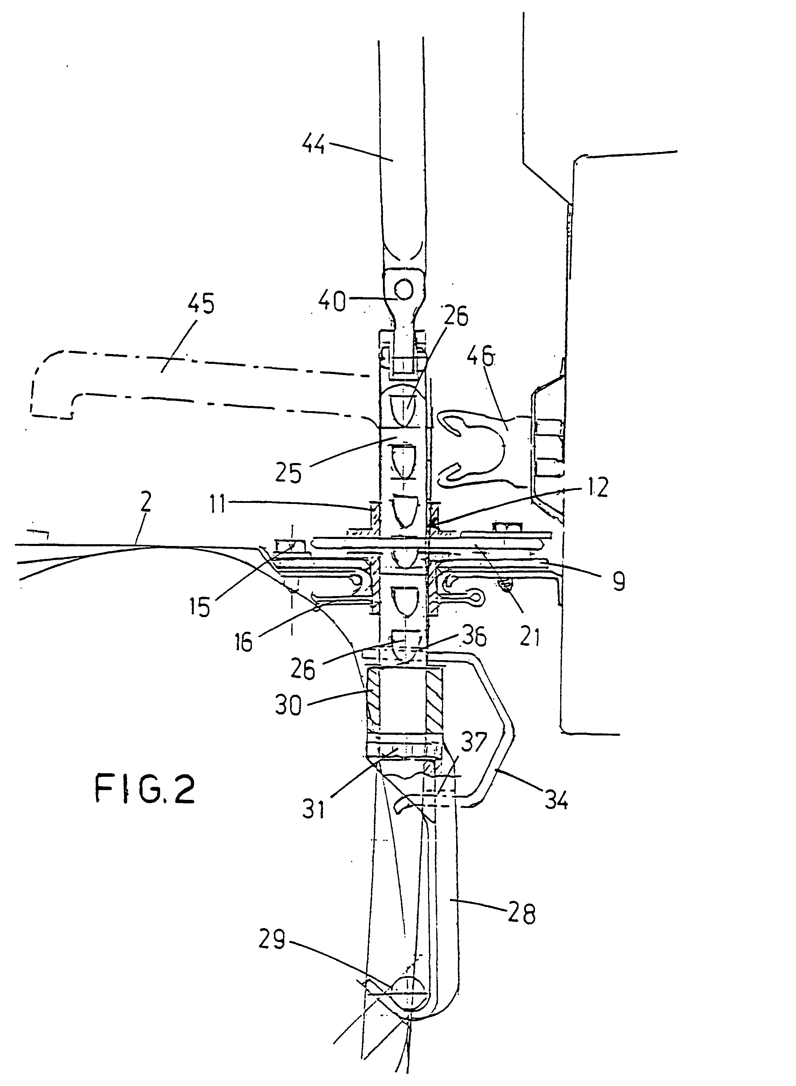

- FIG. 2: is an enlarged view of some details of FIG. 1;

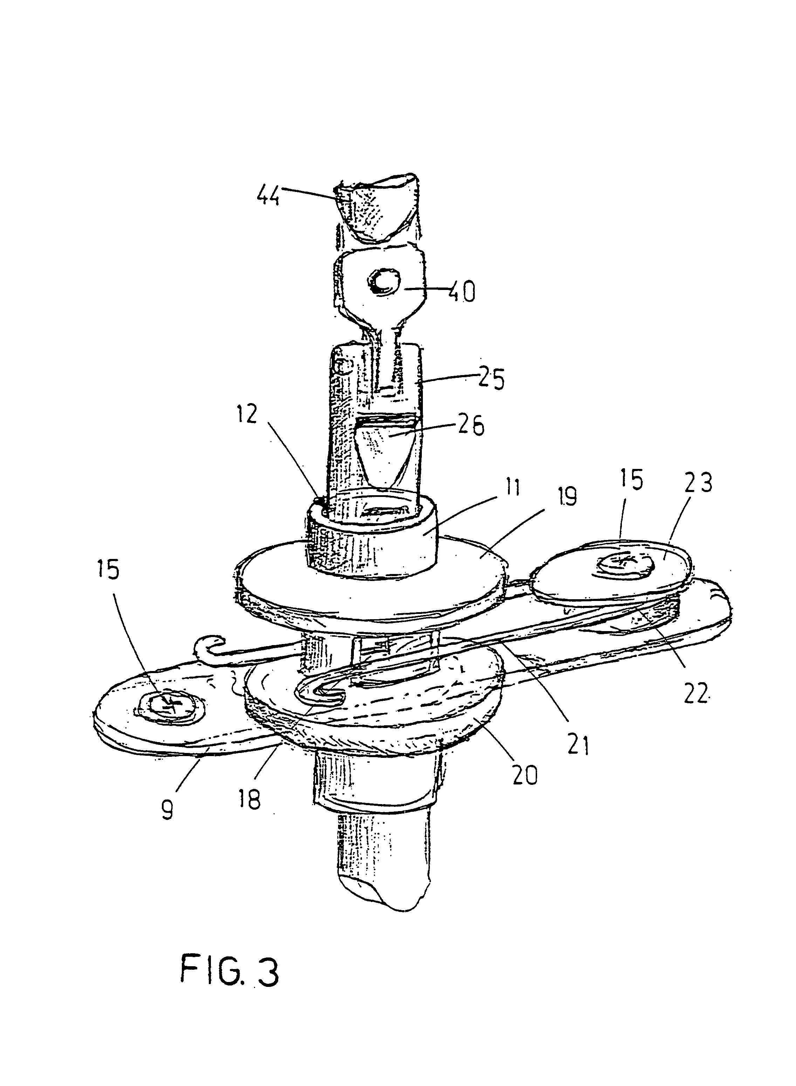

- FIG. 3: is a perspective view of a locking system and a toothed rod forming part of the device of FIG. 1; and
- FIGS. 4 to 7: are side views and bottom views illustrating in partial cross section the operation of the device of this invention.

Referring to the drawings, designated at 2 is the rear part of the floor of a car. The lower face of the floor bears a support element 4 to which there is pivotally mounted a cage 5 for containing a spare tire 7.

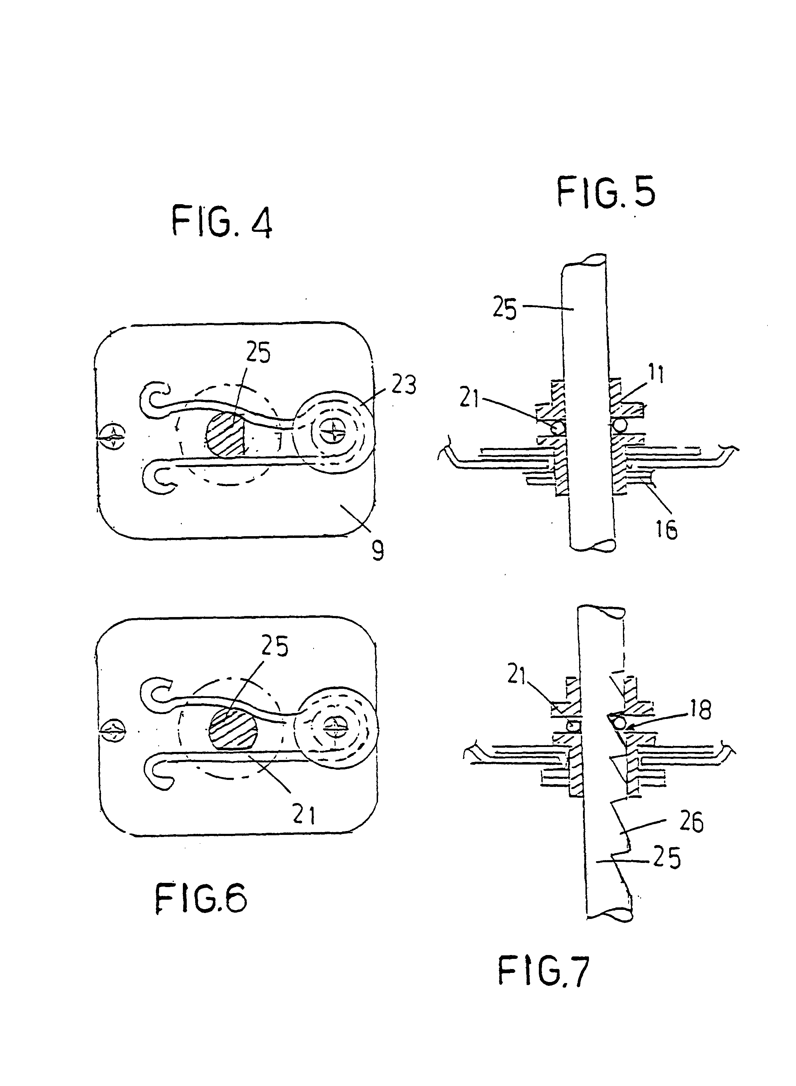

Fitted on the upper part of the floor, normally within the boot, is a plate 9 carrying a cylindrical bushing 11 provided with an axial bore. The bushing 11 is positioned within a corresponding bore 13 formed in the floor 2. A through bore 12 sets the upper side of the floor in communication with its lower side. Plate 9 is fixed to the floor by screws 15. The bushing 11 is bound to the plate and the floor by a pin 16. In the median portion of the outer surface of bushing 11 there are formed two opposite cuts 18, delimited by two containing annular protrusions 19, 20 providing a rest for the leg portions 21 of a U-shaped spring 22. Spring 22 is fixed to the plate 9 by one of the screws 15 with a flanged bushing 23 interposed. Within the bore 11 of bushing 9 there is slidably inserted a rod 25 having a gullet toothing 26 facing the part underneath the floor 2. The toothing 26 is so formed as to engage the leg portions 21 of spring 22, as shown in further detail in FIG. 7. The length of toothing 26 is adapt to compensate for the difference of thickness of tires of different sizes. The lower end portion of rod 25 extending underneath the floor 2 is provided with a hook 28 for hooking a seat 29 of the cage 5. For connecting to the rod 25, the hook 28 has a tubular portion 30 inserted over the rod and connected thereto by means of a bolt 31 screwed into said rod. A U-spring 34 is inserted in circular seats 36, 37 formed in the rod 25 and the hook 28 to provide for an elastic containment of rotation between the tubular portion 30 and the hook 28 and the rod 25. The other end of the rod, i.e. that end facing the upper part of the floor and located within the boot, is connected to a handling lever 41 by means of an articulation 40. Lever 41 is comprised of an elongated arm 44 and a handle 45 substantially perpendicular to said arm. Lever 41 is adapt to fold, in a rest position, at a 90 degree angle relative to the rod 25 to which it is connected, so as to be inserted in a snap-retaining seat 46 integral with the vehicle floor or a part of the vehicle body substantially perpendicular to the floor 2. The length of the arm portion 44 of lever 41 is determined by the distance of the cage 5 from the ground.

Operation of the device according to the present invention is as follows.

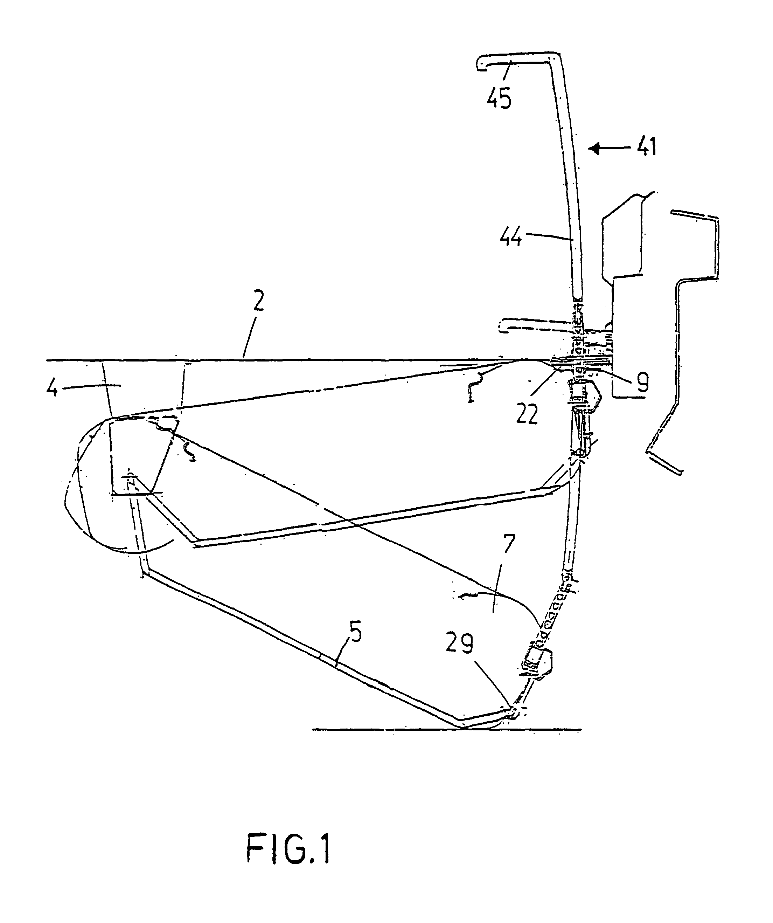

When it is desired to take the spare tire 7 out of the cage 5, and it is therefore necessary to lower the cage and tilt same about the support 4, it is first of all necessary to unhook the lever 41 from the seat 46 and bring the lever in a vertical position. A rotation movement is then imparted through the handle 45, so that the rod 25 rotates about it own axis and disengages the toothing 26 from the leg portion 21 of spring 22 (FIGS. 4 and 5). In this manner, keeping the lever 41 rotated, the rod 25 owing to its own weight is free to slide along the bushing 11, followed by the lever arm 44 until the cage touches the ground. The lever will so reach the position illustrated in FIG. 1 in partial phantom line. Upon releasing the handle 45, the lever returns to its original position toothing about its axis and biased by the U-spring 34, as the end portion of the U-spring 34 connected to the hook 28 is still in its starting position. This is allowed by the special connection 30 to the rod 25, that allows mutual rotation of the two parts. To take the spare tire out, the hook 28 is released from the cage 5 and rotated upwardly as a unit with rod 25 through the articulation 40, such that a passage is opened in front of the spare tire. Should the passage be too narrow, the lever 41 can be lifted upwardly until the toothing 26 engages the leg portion of spring 22 again.

The same action of pulling the lever 41, if carried out with more strength, allows to bring the cage 5 back into its upper position once the spare wheel or the wheel being replaced has been fitted inside the cage. Lever 41 can then be folded back again and fixed to the seat 46.

All the above operations can be carried out quickly, with little effort and without getting dirty.

As apparent, those skilled in the art may now carry out the invention in similar manners without departing from the inventive concepts disclosed herein.

## Claims

1. A device for actuating a spare tire holder cage (5) from the boot of a motor vehicle, said cage being hinged under the rear part of the floor (2) and comprising, in combination: foldable lifting means (41) for lifting the non-hinged part of the cage (5) against the floor (2) and lowering said non-hinged part to the ground;
releasable locking means (11, 22, 25) for locking said foldable lifting and lowering means in a position where the cage is lifted against the floor (2), said locking means (11, 22, 25) being connected to said foldable means (41) and said cage (5);
mounting means (9) for supporting said releasable locking means, said mounting means being fixable to the upper part of the floor,
**characterised in that** said locking means are comprised of a rod (25) connected to the lever (41) by an articulation (40), said rod providing a downwardly facing toothing (26) and being slidably inserted in an axial bore of a bushing (11), said toothing engaging the leg portions (21) of a U-shaped spring (22), said leg portions projecting within said bushing through apertures (18) formed in the side wall of the bushing.

2. An actuating device as claimed in claim 1,
**characterised in that** said mounting means consist of a plate (9) fixable to the vehicle floor (2) and supporting said bushing (11) at a through bore formed in the floor and said U-shaped spring (22) by means of a flanged bushing (23).

3. An actuating device as claimed in claims 1,
**characterised in that** the end portion of said rod (25) not connected to said lever (41) is connected to a hook(28) for hooking in a seat of said cage (5).

4. An actuating device as claimed in claim 3,
**characterised in that** the relative angular position between the hook and the rod is kept in elastic manner by a U-spring (34), said U-spring having a first end portion inserted in said rod (25) and a second end portion inserted in said hook (28).

## Patentansprüche

1. Vorrichtung zum Betätigen eines Reserveradkäfigs (5) vom Kofferraum eines Kraftfahrzeugs aus, wobei der Käfig unter dem rückwärtigen Teil des Bodens (2) angelenkt ist und umfasst, in Kombination:
klappbare Hebemittel (41) zum Anheben des nicht angelenkten Teils des Käfigs (5) gegen den Boden (2) und
zum Absenken des nicht angelenkten Teils zum Untergrund;
lösbare Verriegelungsmittel (11, 22, 25) zum Verriegeln der klappbaren Hebe- und Absenkmittel in einer Position, in welcher der Käfig gegen den Boden (2) angehoben ist, wobei die Verriegelungsmittel (11, 22, 25) mit den klappbaren Mitteln (41) und dem Käfig (5) verbunden sind;
Montagemittel (9) zum Tragen der lösbaren Verriegelungsmittel, wobei die Montagemittel am oberen Teil des Bodens befestigt werden können,
**dadurch gekennzeichnet, dass**
die Verriegelungsmittel aus einer Stange (25) bestehen, welche mit dem Hebel (41) über ein Gelenk (40) verbunden ist, wobei die Stange eine nach unten weisende Verzahnung (26) vorsieht und gleitend in eine axiale Bohrung einer Buchse (11) eingeführt ist, wobei die Verzahnung mit den Schenkelabschnitten (21) einer U-förmigen Feder (22) in Eingriff steht, wobei die Schenkelabschnitte durch Öffnungen (18), welche in der Seitenwand der Buchse ausgebildet sind, in die Buchse vorragen.

2. Betätigungsvorrichtung nach Anspruch 1,
**dadurch gekennzeichnet, dass**
die Montagemittel aus einer Platte (9) -bestehen, welche am Fahrzeugboden (2) befestigbar ist und die Buchse (11) an einem Durchgangsloch, welches im Boden ausgebildet ist, und die U-förmige Feder (22) mittels einer Flanschbuchse (23) trägt.

3. Betätigungsvorrichtung nach Anspruch 1,
**dadurch gekennzeichnet, dass**
jener Endabschnitt der Stange (25), welcher nicht mit dem Hebel (41) verbunden ist, mit einem Haken (28) zum Einhaken in einen Sitz des Käfigs (5) verbunden ist.

4. Betätigungsvorrichtung nach Anspruch 3,
**dadurch gekennzeichnet, dass**
die relative Winkelposition zwischen dem Haken und der Stange durch eine U-Feder (34) elastisch aufrechterhalten wird, wobei die U-Feder einen ersten Endabschnitt aufweist, welcher in die Stange (25) eingeführt ist, und einen zweiten Endabschnitt, welche in den Haken (28) eingeführt ist.

## Revendications

1. Dispositif destiné à actionner une cage de maintien de roue de secours (5) depuis le coffre d'un véhicule à moteur, ladite cage étant articulée sous la partie arrière du plancher (2) et comprenant, en combinaison :
un moyen de relèvement pliable (41) destiné à relever la partie non articulée de la cage (5) contre le plancher (2) et à abaisser ladite partie non articulée vers le sol,
un moyen de verrouillage libérable (11, 22, 25) destiné à verrouiller ledit moyen de relèvement et d'abaissement pliable dans une position où la cage est relevée contre le plancher (2), ledit moyen de verrouillage (11, 22, 25) étant relié audit moyen pliable (41) et à la cage (5),
un moyen de montage (9) destiné à supporter ledit moyen de verrouillage libérable, ledit moyen de montage pouvant être fixé à la partie supérieure du plancher,
**caractérisé en ce que** ledit moyen de verrouillage comporte une tige (25) reliée au levier (41) par une articulation (40), ladite tige présentant une denture tournée vers le bas (26) et étant insérée par coulissement dans un alésage axial d'une douille (11), ladite denture recevant les parties de branches (21) d'un ressort en forme de U (22), lesdites parties de branche faisant saillie à l'intérieur de ladite douille au travers d'ouvertures (18) ménagées dans la paroi latérale de la douille.

2. Dispositif d'actionnement selon la revendication 1, **caractérisé en ce que** ledit moyen de montage est constitué d'une plaque (9) pouvant être fixée au plancher du véhicule (2) qui supporte ladite douille (11) au niveau d'un trou traversant formé dans le plancher et ledit ressort en forme de U (22) au moyen d'une douille à collerette (23).

3. Dispositif d'actionnement selon la revendication 1, **caractérisé en ce que** la partie d'extrémité de ladite tige (25) non reliée audit levier (41) est reliée à un crochet (28) destiné à s'accrocher dans un siège de ladite cage (5).

4. Dispositif d'actionnement selon la revendication 3, **caractérisé en ce que** la position angulaire relative entre le crochet et la tige est maintenue de manière élastique par un ressort en forme de U (34), ledit ressort en forme de U ayant une première partie d'extrémité insérée dans ladite tige (25) et une seconde partie d'extrémité insérée dans ledit crochet (28).
